# EUROPÄISCHE PATENTSCHRIFT

(11) **EP 2 105 629 B1**
(45) Veröffentlichungstag und Bekanntmachung des Hinweises auf die Patenterteilung: **24.10.2012**
(21) Anmeldenummer: 09005538.5
(22) Anmeldetag: 01.08.2003
(51) Int. Cl.: F16F 1/38, F16F 1/387

(54) **Radiallager**
Radial bearing
Palier radial

(30) Priorität: 01.08.2002 DE 10235303
(43) Veröffentlichungstag der Anmeldung: 30.09.2009
(62) Teilanmeldung aus: 03017416.3
(73) Patentinhaber: Anvis Deutschland GmbH, 63628 Bad Soden-Salmünster (DE); Volkswagen Aktiengesellschaft, 38440 Wolfsburg (DE)
(72) Erfinder: Mohr, Martin, 63628 Bad Soden-Salmünster/Eckhardroth (DE); Schmidt, Rainer, 38159 Vechelde (DE); Schulze, Carsten, 38440 Wolfsburg (DE); Walenczyk, Kai, 38159 Vechelde (DE)
(74) Vertreter: Schmid, Nils T.F.

(56) Entgegenhaltungen:
- EP-A- 0 809 039
- EP-A- 1 247 678
- JP-A- 6 147 245
- US-A- 4 471 935
- US-A- 4 697 795
- US-A- 5 174 541
- US-A- 5 704 597
- US-A- 6 019 342
- PATENT ABSTRACTS OF JAPAN Bd. 1996, Nr. 01, 31. Januar 1996 (1996-01-31) -& JP 07 233849 A (N O K MEGURASUTEITSUKU KK), 5. September 1995 (1995-09-05)

## Beschreibung

Die Erfindung betrifft ein Radiallager, insbesondere zur Lagerung von Maschinen,Maschinenteilen und/oder Kraftfahrzeugteilen, umfassend ein sich entlang einer Längsachse des Radiallagers erstreckendes, mit einem zu lagernden Körper über zumindest eine Momentstütze verbindbares, im wesentlichen starres Innenteil und ein widerlagerbildendes, das Innenteil, insbesondere zumindest bereichsweise, koaxial umgebendes, im wesentlichen starres Außenteil und zumindest einen, das Innenteil mit dem Außenteil verbindenden elastischen Tragkörper, wobei das Innenteil im wesentlichen in zur Längsachse senkrechter Richtung relativ zum Außenteil bewegbar ist.

Aus dem Stand der Technik ist eine Vielzahl von Radiallagern, insbesondere zum Einsatz in der Kraftfahrzeugtechnik, bekannt. So offenbart die US 6,019,342 eine Antivibrationsvorrichtung. In diesem gattungsgemäßen Lager sind zwei starre Kraftglieder über einen elastomeren Körper miteinander verbunden. Der Elastomerkörper weist eine erste und zweite Auskragung auf, die sich parallel zueinander erstrecken. Die Auskragungen dienen dazu, die relativen Bewegungen der Kraftglieder entlang einer vorbestimmten Achse und in eine vorbestimmte Richtung zu begrenzen. Die zweite Auskragung ist weniger steif als die erste und kommt bei einer Bewegung früher in Kontakt mit einer entsprechenden Gegenfläche, als die erste Auskragung.

Ferner offenbart die EP 0 748 949 B1 ein gattungsgemäßes Radiallager, insbesondere zum Einsatz bei der Lagerung von Kraftfahrzeugmotoren. Das Radiallager umfaßt eine Außenhülse und eine zur Außenhülse koaxial als Buchsenkern ausgebildete Innenhülse, wobei die Außen- und die Innenhülse über Tragkörper miteinander verbunden sind. Weiterhin sind in einem zwischen Innen- und Außenhülse vorliegenden Freiraum mindestens ein radial augegerichteter Elastomerkörper und mindestens ein Gummiendanschlag angeordnet, wobei der Gummiendanschlag nach einer vorbestimmbaren Einfederung des Elastomerkörpers wirkt.

Nachteilig bei den gattungsgemäßen Radiallagern ist jedoch, daß wenn die Innenhülse bzw. das erste Kraftglied über den Gummiendanschlag bzw. die erste Auskragung in Kontakt mit der Außenhülse bzw. dem zweiten Kraftglied kommt, eine Kraftübertragung in die Außenhülse bzw. das zweite Kraftglied sehr lokal stattfindet. Dementsprechend kommt es aufgrund der hohen punktuellen Belastung zu einer schnelleren Ermüdung des Materials der Außenhülse bzw. des zweiten Kraftgliedes, die zu einer Zerstörung dieser Teile der Radiallager führen können. Somit ist den gattungsgemäßen Radiallagern eine hohe Ausfallrate eigen bzw. muß die Struktur der Außenhülse bzw. des zweiten Kraftglieds groß dimensioniert werden, was zu einem erhöhten Gewicht bzw. vergrößerten Dimensionen des Radiallagers führt.

Ferner offenbart die DE 41 42 587 A1 einen Hilfsrahmen mit schwenkbar daran angelenkten Dreiecksquerlenkern, wobei der Hilfsrahmen und der Dreiechsquerlenker über gattungsgemäße Lager miteinander verbunden sind. Der Hilfsrahmen findet über eine gabelförmige Momentstütze Angriff an einem Innenteil des Lagers, während der Dreiechsquerlenker mit dem Außenteil des Lagers verbunden ist. Nachteilig bei einem derartigen Lager ist jedoch, daß die über die gabelförmige Momentstütze in das Lager eingebrachte Kraft nicht zentrisch innerhalb des Lagers abgetragen wird. Dies kann ebenfalls zu lokalen Überbeanspruchungen des Lagers führen.

US 4,471,935 offenbart ein elastisches Lager gemäß dem Oberbegriff des Anspruchs 1 mit einem im wesentlichen T-förmigen Elastomerkörper, der einen Innenzylinder an einen Außenzylinder abstützt.

JP 06147245 offenbart ein Isolationslager mit einem Innenzylinder und einem Außenzylinder sowie einen dazwischen liegenden Elastomerkörper. An der Innenseite des Außenteils sind Anschlagspuffer vorgesehen.

EP 0 809 039 A1 offenbart eine Hülsengummifeder mit zwei Außenanschlägen und einem Mittelanschlag, die im gleichen Abstand zum starren Außenteil angeordnet sind. Aus EP 1 247 678 ist eine Pendelstütze für ein Aggregat in einem Kraftfahrzeug mit einem Stützarm bekannt, der sich durch eine Öffnung eines starren Außenteils eines Radiallagers erstreckt.

Aufgabe der vorliegenden Erfindung ist es daher, die gattungsgemäßen Radiallager derart weiterzuentwickeln, daß die Nachteile des Stands der Technik überwunden werden, insbesondere eine gleichmäßige Abtragung von innerhalb des Lagers wirkenden und von außen in das Lager eingebrachten Kräften sichergestellt ist.

Diese Aufgabe wird durch ein Radiallager gemäß Anspruch 1 gelöst.

Dabei ist bevorzugt, daß die Endanschläge im wesentlichen in einer gemeinsamen radialen Ebene, gemeinsam mit dem Prallsegment angeordnet sind, wobei das Prallsegment zwischen den Endanschlägen angeordnet ist.

Dabei ist bevorzugt, daß der erste Winkel (α) im Bereich von 30° bis 150° liegt.

Ein erfindungsgemäßes Radiallager kann dadurch gekennzeichnet sein, daß das Prallsegment zumindest einen ersten mit dem Innenteil verbundenen elastischen Körper oder zumindest einen zweiten mit dem Außenteil verbundenen elastischen Körper umfaßt oder das Prallsegment durch die Kontur des Innenteils oder des Außenteils gebildet ist, wobei der erste elastische Körper oder die Kontur des Innenteils eine zu dem zweiten elastischen Körper oder der Kontur des Außenteils komplementäre Oberflächenform aufweisen.

Ferner kann vorgesehen sein, daß die Endanschläge jeweils zumindest einen dritten mit dem Innenteil verbundenen elastischen Körper oder jeweils zumindest einen vierten mit dem Außenteil verbundenen elastischen Körper umfassen, wobei der dritte elastische Körper oder die Kontur des Innenteils eine zu dem vierten elastischen Körper oder der Kontur des Außenteils komplementäre Oberflächenform aufweisen.

Bei den vorgenannten Alternativen ist bevorzugt, daß der erste, zweite, dritte und/oder vierte elastische Körper zumindest zwei Bereiche unterschiedlicher Elastizität aufweist bzw. aufweisen.

Ferner kann vorgesehen sein, daß der erste und zweite elastische Körper, der dritte und vierte elastische Körper und/oder der erste, zweite, dritte oder vierte elastische Körper einstükkig ausgebildet sind.

Eine bevorzugte Ausführungsform des Radiallagers ist erfindungsgemäß dadurch gekennzeichnet, daß der erste, zweite, dritte oder vierte elastische Körper zumindest einen Hohlraum, zumindest eine denselben bzw. dieselben zumindest bereichsweise durchsetzende Bohrung oder zumindest einen Hohlkanal aufweisen, wobei der Hohlraum, die Bohrung oder der Hohlkanal mit einem Fluid füllbar ist bzw. sind, der Hohlraum, die Bohrung oder der Hohlkanal zur Einstellung der elastischen Eigenschaften des bzw. der elastischen Körper vorzugsweise mittels zumindest eines Ventils zum Hinzufügen oder Entnehmen von Fluid aus dem Hohlraum, der Bohrung oder dem Hohlkanal öffnenbar und verschließbar sind, der Hohlraum, die Bohrung oder der Hohlkanal zumindest eine Verbindung mit der Umgebung des bzw. der elastischen Körper(s) mittels zumindest eines Drosselelementes aufweisen oder zumindest zwei voneinander getrennte oder über zumindest ein Ventil oder zumindest ein Drosselelement miteinander in Wirkverbindung stehende Hohlräume, Bohrungen und/oder Hohlkanäle in dem bzw den elastischen Körper(n) vorhanden sind.

Es kann vorgesehen sein, daß eine, insbesondere im an das Radiallager angrenzenden Bereich, gabelförmig ausgeführte Momentstütze Angriff an den axialen Enden des Innenteils findet

Dabei ist bevorzugt, das der erste, zweite, dritte oder vierte elastische Körper oder .der das Prallsegment oder den Endanschlag bildende Bereich des Innenteils oder Außenteils entlang der Längsachse des Radiallagers zumindest bereichsweise gewölbte Kontur aufweist.

Eine vorteilhafte Ausführungsform des Radiallagers sieht vor, daß das Außenteil, der zweite oder der vierte elastische Körper zumindest eine im wesentlichen in radialer Richtung verlaufende erste Öffnung zur Hindurchführung der Momentstütze durch das Außenteil aufweist.

Dabei kann vorgesehen sein, daß der Tragkörper zum Hindurchführen der Momentstütze zumindest eine zweite Öffnung oder das Innenteil, der erste oder dritte elastische Körper zur Aufnahme der Momentstütze zumindest eine dritte Öffnung aufweist, wobei sich die erste, zweite oder dritte Öffnung zumindest teilweise überdecken.

Bei den beiden vorgenannten Alternativen ist bevorzugt, daß die erste, zweite oder dritte Öffnung im wesentlichen mittig bezüglich der Länge des Radiallagers angeordnet sind.

Vorteilhafter Weise ist in einem erfindungsgemäßen Radiallager vorgesehen, daß das Innenteil, der elastische Tragkörper, der erste, zweite, dritte oder vierte elastische Körper oder das Aüßenteil entlang zumindest einer Ebene senkrecht zur Längsachse des Radiallagers im Bereich der ersten, zweiten oder dritten Öffnung mehrteilig ausgeführt sind, wobei die beiden Teile des Innenteils, des Tragkörpers, des ersten, zweiten, dritten oder vierten elastischen Körpers oder des Außenteils im wesentlichen spiegelsymmetrisch zu der Ebene ausgebildet sind.

Ferner ist bevorzugt, daß der erste oder dritte elastische Körper oder der das Prallsegment oder den Endanschlag bildende Bereich des Innenteils zumindest bereichsweise eine bezüglich der Längsachse des Radiallagers geneigte Kontur aufweist, wobei die Kontur vorzugsweise ausgehend von einer auf Höhe der ersten Öffnung liegenden Ebene entlang der Längsachse des Radiallagers in radialer Richtung nach außen geneigt ist.

Eine vorteilhafte Ausgestaltung des Radiallagers sieht vor, daß der zweite oder vierte elastische Körper oder der das Prallsegment oder den Endanschlag bildende Bereich des Außenteils zumindest bereichsweise eine bezüglich der Längsachse des Radiallagers geneigte Kontur aufweist, wobei die Kontur ausgehend von einer auf Höhe der ersten Öffnung liegenden Ebene entlang der Längsachse des Radiallagers in radialer Richtung nach außen geneigt ist.

Schließlich kann vorgesehen sein, daß das Innenteil mittels einer Steck-, Klipp-, Schweiß-, Kleb- oder Schraubverbindung mit der Momentstütze verbindbar ist, wobei die Schraubverbindung zumindest ein von dem Innenteil oder der Momentstütze umfaßtes Außengewinde und eine von der Momentstütze oder dem Innenteil umfaßten Gewindebohrung oder einen durch eine Bohrung sowohl im Innenteil als auch der Momentstütze verlaufenden Gewindebolzen, wobei die Bohrung des Innenteils und/oder der Momentstütze zumindest bereichsweise ein Innengewinde oder eine aufgesetzte Mutter aufweist, umfaßt, oder das Innenteil einstückig mit der Momentstütze ausbildbar ist.

Der Erfindung liegt somit die überraschende Erkenntnis zugrunde, daß ein Radiallager, insbesondere zum Einsatz in der Kraftfahrzeugtechnik, derart ausgebildet werden kann, daß Kräfte, die innerhalb des Lagers entstehen bzw. diesem von außen aufgeprägt werden, so im Radiallager abgetragen werden können, daß eine lokale Überbeanspruchung des Lagers vermieden wird. Durch eine Öffnung innerhalb des Außenteils des Lagers wird erreicht, daß eine Momentstütze in der Mitte der Längsachse des Radiallagers Angriff an das Innenteil finden kann und somit eine über die Momentstütze auf das Lager übertragene Kraft zentrisch in das Lager abgetragen wird. Neben dieser vorteilhaften Kraftübertragung in das Lager vereinfacht sich die Geometrie und der Aufbau der Momentstütze. Bei Verwendung einer gabelförmigen Momentstütze muß insbesondere der Gabelbereich erhöhten Festigkeitsanforderungen genügen, um eine Überbeanspruchung der Momentstütze und damit eine Fehlfunktion derselben zu vermeiden. Aufgrund der Hebelwirkung der Gabel kommt es nämlich zur Ausbildung von Kräften innerhalb der Momentstütze, die nicht an das Lager übertragen werden und somit von der Momentstütze selbst aufgenommen werden. So werden im Stand der Technik im wesentlichen Momentstützen eingesetzt, die aus Stahl bestehen. Bei Verwendung eines erfindunggemäßen Radiallagers kann dagegen eine Momentstütze eingesetzt werden, die aus einem Leichtbaumaterial, insbesondere Aluminium, Magnesium, einer Keramik oder dergleichen, besteht. Darüber hinaus führt die Ausformung der Momentstütze in Gabelform dazu, daß aufgrund der Hebelwirkung der Gabel Kraftkomponenten in das Lager übertragen werden und von diesem aufgenommen werden, die bei einem zentrischen Angriff der Kraft nicht auftreten. Ferner sind bei einem gabelförmigen Angriff der Momentstütze an das Radiallager Freiwege in der Umgebung des Radiallagers zur Aufnahme der Momentstütze freizuhalten. Somit wird durch das erfindungsgemäße Radiallager sowohl den Leichtbauanforderungen, als auch den Anforderungen an einen geringeren Platzbedarf, die immer größere Bedeutung im Kraftfahrzeugbau bekommen, genüge getan. Insbesondere die zweiteilige Ausführung des Radiallagers mit einem zentrischen Kraftangriff der Momentstütze fuhrt zu einer vereinfachten Montage und ermöglicht einen modularen Aufbau des Radiallagers, was zu einer einfachen Einstellung der Lagercharakteristiken führt und Lagerkosten reduziert, da nur eine begrenzte Anzahl unterschiedlicher Einzelkomponenten vorzuhatten ist.

Darüber hinaus können durch die Erfindung die innerhalb des Lagers wirkenden Kräfte so abgetragen, daß eine Überbeanspruchung der Komponenten des Lagers vermieden wird. Gemäß der Erfindung kann der Endanschlag nämlich seine Kraft in einem großen Winkel (größer als 40°) abtragen. Dies bewirkt, daß die Kräfte, die bei den aus dem Stand der Technik bekannten Lagern in einer radialen Ebene wirken, in zumindest zwei Radialebenen aufgeteilt werden. Diese Teilung führt dazu, daß die Kraftkomponenten in den umgebenden Bauteilen relativ niedrig sind. Die Endanschläge sind derart ausgeformt daß komplementäre Oberflächen in Anschlag kommen, um eine punktuelle Belastung zu vermeiden und damit eine größtmögliche Fläche zur Erreichung einer geringen Flächenlast wirkt. Somit wird in dem erfindungsgemäßen Radiallager eine gleichmäßige Kraftverteilung erzielt, was zu einer erhöhten Belastbarkeit des Lagers bei gleicher Dimensionierung des Lagers bzw. der das Lager umgebenden Bauteile im Vergleich zu einem im wesentlichen nur in einer Ebene parallel zu der Längsachse des Radiallagers wirkenden Endanschlag führt. Andererseits werden Ermüdungserscheinungen des Materials verringert und somit eine erhöhte Lebensdauer des Radiallagers bewirkt.

Weitere Merkmale und Vorteile der Erfindung ergeben sich aus den nachstehenden Beschreibungen, in der bevorzugte Ausführungsformen der Erfindung beispielshaft anhand schematischer Zeichnungen im Einzelnen erläutert sind.

Dabei zeigt:
- Fig. 1: Eine Aufsicht auf ein erfindungsgemäßes Radiallager;
- Fig. 2: eine Schnittansicht entlang der Längsachse des Radiallagers der Fig. 1;
- Fig. 3: eine Schnittansicht aus der Richtung A der Fig. 2 des Radiallagers der Fig. 1 und 2;
- Fig. 4: eine Schnittansicht aus Richtung C der Fig. 3;
- Fig. 5: eine Teilschnittansicht aus Richtung D der Fig. 3;
- Fig. 6: eine Teilschnittansicht einer zweiten erfmdungsgemäßen Ausführungsform eines Radiallagers; und
- Fig. 7: eine Teilschnittansicht einer dritten Ausführungsform eines erfindungsgemä-ßen Radiallagers.

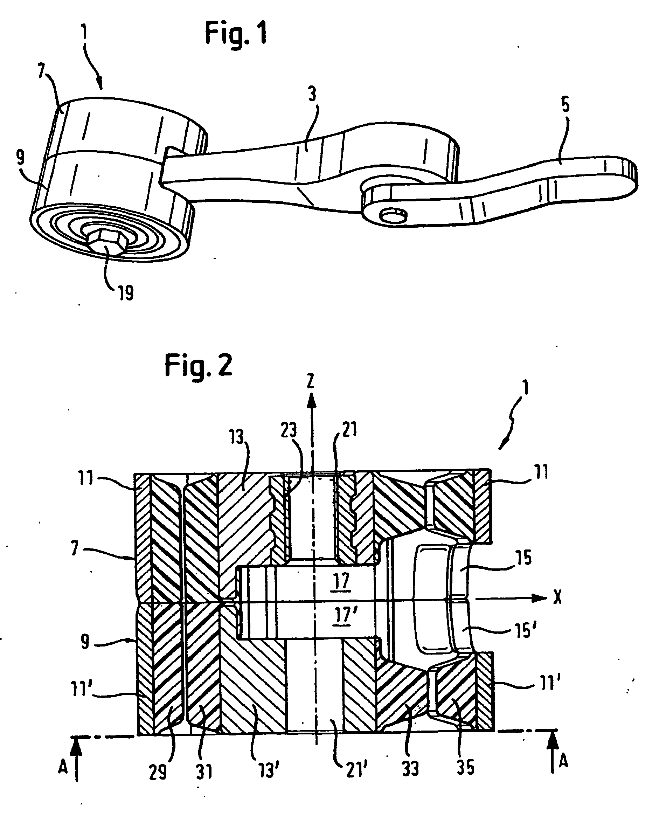

In Fig. 1 ist ein erfindungsgemäßes Radiallager 1 in Aufsicht dargestellt. Mit dem Radiallager 1 ist eine Momentstütze 3 verbunden, die wiederum über ein Gelenk mit einem Träger 5 in Verbindung steht. Unter Momentstütze im Sinne der Erfindung wird im allgemeinen ein Element verstanden, daß zur Herstellung einer Verbindung zwischen einem durch das Radiallager zu lagerndern Körper und dem Radiallager dient. Diese Momentstütze kann mit dem Körper verbindbar sein oder einstückig mit diesem und/oder dem Innenteil des Radiallagers ausgeführt sein. Wie Fig. 1 zu entnehmen ist, ist das Radiallager 1 zweiteilig ausgeführt. Es umfaßt einen oberen Lagerteil 7 sowie einen unteren Lagerteil 9.

In Fig. 2 ist eine Schnittansicht des Radiallagers 1 der Fig. 1 entlang der X-Z-Ebene des Radiallagers 1 dargestellt. Hierbei entspricht die Z-Achse der Längsachse des Radiallagers. Als radiale Richtung wird in dieser Erfindung eine zur Längsachse senkrechte Richtung verstanden. Die Bezugszeichen entsprechen denjenigen der Fig. 1, wobei in Fig. 2 die Momentstütze, die sich in Fig. 1 entlang der X-Achse des Radiallagers erstreckt, nicht dargestellt ist. Wie Fig. 2 zu entnehmen ist, bestehen sowohl das obere Lagerteil 7 als auch das untere Lagerteil 9 aus einem das Gehäuse des jeweiligen Lagerteils 7, 9 bildenden Außenteil 11, 11' sowie einem Innenteil 13, 13'. Dabei weisen sowohl das Außenteil 11 des oberen Lagerteils 7 als auch das Außenteit 11' des unteren Lagerteils 9 eine Aussparung 15, 15' auf, so daß das Außenteil 11, 11' des Radiallagers 1 im zusammengebauten Zustand eine Öffnung aufweist, durch welche die Momentstütze 3 in das Innere des Radiallagers 1 hineinreicht. Ferner weist das Innenteil 13, 13' ebenfalls Aussparungen 17, 17' auf, die zur Aufnahme der Momentstütze 3 dienen. Die Momentstütze 3 wird über einen in Fig. 2 nicht dargestellten Gewindebolzen 19 mit dem Innenteil 13, 13' kraft- und formschlüssig verbunden. Hierzu weist das Innenteil 13' eine Bohrung 21' auf, durch welche der Gewindebolzen 19 hindurchgeführt wird, während in eine Bohrung 21 des Innenteils 13 ein Gewinde 23 eingelassen ist. In dieses Gewinde 23 wird der Gewindebolzen 19 eingeschraubt.

Neben der in den Figuren 1 und 2 dargestellten Verbindung der Momentstütze 3 mit dem Innenteil 13, 13' des Radiallagers 1 kann in einer nicht dargestellten Ausführungsform eines erfindungsgemäßen Radiallagers vorgesehen sein, daß eine Momentstütze durch eine Klippverbindung mit einem Innenteil verbunden wird, die Momentstütze selbst ein Gewinde aufweist und das Innenteil eine Gewindebohrung aufweist, in welche die Momentstütze eingeschraubt wird oder andere aus dem Stand der Technik bekannte Verfahren zur Befestigung der Momentstütze an dem Innenteil des Radiallagers realisiert werden.

Der zweiteilige Aufbau des Radiallagers 1 bietet verschiedene Vorteile. Einerseits wird eine leichtere Montage der Momentstütze an dem Radiallager ermöglicht und andererseits ist das Radiallager so modular aufgebaut und es können verschiedene obere Lagerteile mit verschiedenen unteren Lagerteilen zur Einstellung bestimmter Lagercharackteristiken miteinander kombiniert werden.

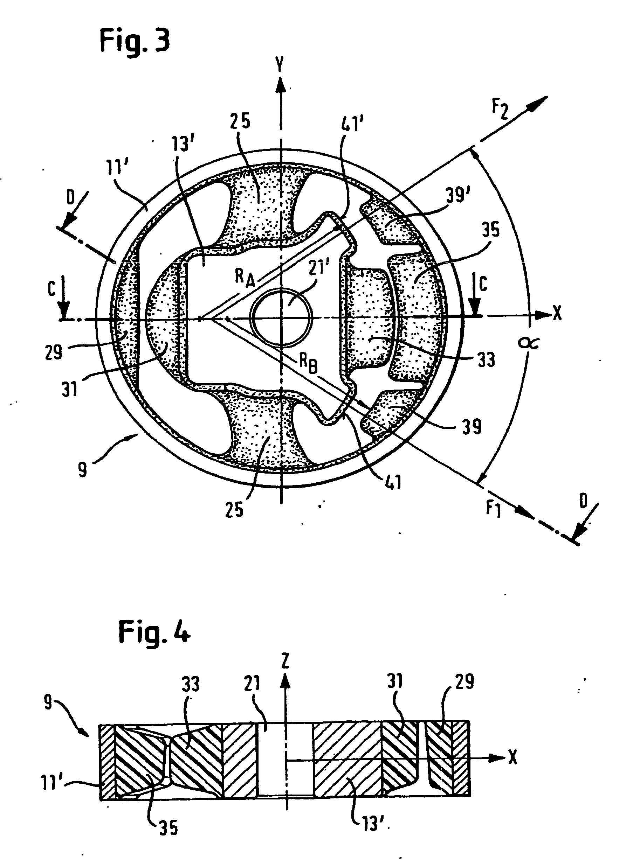

Im Zwischenraum zwischen dem Innenteil 13, 13' und dem Außenteil 11, 11' sind verschiedene Elastomerkörper angeordnet. Der Aufbau und die Verteilung der einzelnen Elastomerkörper wird im Folgenden anhand der Fig. 3, die eine Schnittansicht durch das untere Lagerteil 9 aus Richtung A in Fig. 2 darstellt, erläutert. Das Innenteil 13 ist über Tragkörper in .Form von Stegen 25, die im wesentlichen entlang der Y-Richtung verlaufen, mit dem Au-βenteil 11' verbunden. Die Stege 25 dienen zur Aufnahme der im unteren Lagerteil 9 wirkenden Kräfte im ruhenden Zustand eines über das Radiallager 1 abgestützten Körpers. Kommt es zu einer Bewegung des durch das Radiallager 1 abgestützten Körpers, so sind zur Aufnahme der dadurch entstehenden Kräfte zwischen dem Innenteil 13' und dem Außenteil 11' Prallsegmente sowie Endanschläge angeordnet. Das in den Figuren 1 bis 3 dargestellte Radiallager 1 ist insbesondere zur Aufnahme von Kräften, die entlang der X-Achse des Radiallagers 1 wirken, die beispielsweise der Fahrtrichtung eines Kraftfahrzeuges entspricht, ausbelegt. Hierzu sind die Endanschläge vorzugsweise symmetrisch zu dem in X-Richtung liegenden Prallsegment angeordnet. In anderen nicht dargestellten erfindungsgemäßen Ausführungsformen des Radiallagers kann auch vorgesehen sein, daß eine größere Anzahl von Prallsegmenten bzw. Endanschlägen und eine unterschiedliche Anordnung dieser vorgesehen ist. Hierbei können insbesondere Prallsegmente in beliebigen radialen Richtungen vorgesehen sein, wobei vorzugsweise jeweils zumindest zwei Endanschläge die vorzugsweise summetrisch zu beiden Seiten der Prallsegmente angeordnet sind, vorliegen. Ferner kann eine andere Anordnung, als in der in Fig. 3 dargestellten Y-Richtung, der Stege 25 oder eine andere Form der Stege 25 gewählt werden, ohne sich vom Erfindungsgedanken der vorliegenden Erfindung zu entfernen.

Entlang der X-Richtung ist auf der in Fig. 3 dargestellten linken Seite des unteren Lagerteils 9 ein Prallsegment bestehend aus Elastomerkörpern 29 und 31 angeordnet. Auf der den Elastomerkörpern 29, 31 gegenüberliegenden Seite des Lagerteils 9 ist darüberhinaus ein Prallsegment bestehend aus Elastomerkörpern 33 und 35 ausgebildet. Kommt es zu einer Auslenkung des Innenteils 13' relativ zum Außenteil 11' aufgrund einer Krafteinwirkung auf das Radiallager 1 in X-Richtung, so gelangt das Innenteil 13' über den Elastomerkörper 31 bzw. 33 in Kontakt mit dem Außenteil 11' über den Elastomerkörper 29 bzw. 35. Dies führt dazu, daß das Innenteil 13' durch das Außenteil 11' abgestützt wird, jedoch im wesentlichen akustisch entkoppelt vom Außenteil 11' bleibt. Insbesondere werden als Material für die Elastomerkörper 29, 31, 33, 35 Werkstoffe mit geringer Härte und gutem dynamischen Verhalten verwendet. In aus dem Stand der Technik bekannten Radiallagen werden regelmäßig relativ harte elastische Prallkörper eingesetzt, deren Shore A- Härte im allgemeinen im Bereich von 70 liegt. In einem erfindungsgemäßen Radiallager sind hingegen auch elastische Prallkörper mit einer Härte von 30-55 Shore A, insbesondere auch im Bereich von 40 bis kleiner 50, einsetzbar. Eine derartige Materialauswahl wird durch eine Funktionalitätstrennung zwischen den Prallsegmenten und den nachfolgend beschriebenen Endanschlägen in Form von Elastomerkörpern 39, 39' erreicht. Erfolgt eine stärkere Auslenkung des Innenteils 13' relativ zum Au-βenteil 11' so gelangt das Innenteil 13' bei einer Auslenkung in Richtung des Prallsegments 33, 35 in Anschlag mit Elästomerkörpern 39, 39', die Endanschläge für das Innenteil 13' darstellen. Eine derartige Auslenkung des Innenteils 13' wird insbesondere bei Stoßbelastungen, die auf das Inrienteil 13' übertragen werden, erreicht. Durch die Aufteilung in Prallsegmente und Endanschläge wird eine Funktionstrennung vorgenommen. Dabei sind die Prallsegmente für den akustischen Bereich, die Endanschläge für die Kräfte oberhalb des maximalen Drehmoments ausgelegt. Wie Fig. 3 zu entnehmen ist, sind die Elastomerkörper 39, 39' unter einem Winkel α zueinander angeordnet, und befinden sich jeweils insbesondere entlang im wesentlichen der gesamten Längsachse des Radiallagers. Diese Anordnung der Endanschläge bewirkt, daß eine Stoßkraft, die in X-Richtung auf das Innenteil 13' wirkt, nicht punktuell auf das Außenteil 11' übertragen wird, sondern in zwei Kraftkomponenten F₁, F₂ in einer Ebene senkrecht zur Längsachse (Z) des Lagers aufgeteilt wird. Hierbei ist es besonderes vorteilhaft, wenn der Winkel a im Bereich von 30° - 150° liegt. Zweckmäßigerweise ist der Winkel a α größer als 40° und kleiner als 110° und bevorzugt im Bereich von 60° und 70°. Somit trägt der Endanschlag seine Kraft in einem großen Winkel auf das Außenteil 11' ab, was zu einer Reduzierung der auf die Elastomerkörper 39, 39' wirkende Kraftkomponente bewirkt und somit eine gleichmäßige Kraftübertragung auf das Außenteil 11' sicherstellt. Hierbei wirkt sich insbesondere vorteilhaft aus, wenn die Kontur der Elastomerkörper 39, 39' sowie den Oberflächenbereiche 41, 41' des Innenteils 13' aufeinander abgestimmt sind. Insbesondere ist in dem Radiallager 1 vorgesehen, daß die Oberflächen 41, 41' und 39, 39' jeweils gewölbt sind; wobei die Radien dieser Wölbung R_{A} bzw. R_{B} gleich sind. Dies führt dazu, daß die auf das Innenteil 13' wirkende Kraft in einer Flächenlast auf die Endanschläge abgetragen wird. Die Verwendung der Endanschläge innerhalb des Radiallagers 1 bewirkt, daß bei Dimensionierung der Elastomerkörper 33, 35 Stoßkräfte nicht einbezogen werden müssen. Diese werden über die Elastomerkörper 39, 39' auf das Außenteil 11' übertragen. Durch eine geeignete Auswahl der Abstände zwischen den Elastomerkörpern 33, 35 bzw. dem Innenteil 13' und den Elastomerkörpern 39, 39' läßt sich eine im wesentlichen frei einstellbare Federcharakteristik des Radiallagers in X-Richtung einstellen. In einer weiteren nicht dargestellten Ausführungsform kann vorgesehen sein, daß die Prallsegmente und/oder Endanschläge durch Elastomerkörper gebildet werden, die das Innenteil mit dem Außenteil verbinden. In dieser Ausführungsform werden die Dämpfungscharakteristiken über die elastischen Eigenschaften dieser Elastomerkörper eingestellt.

In der in den Figuren 1 bis 3 dargestellten Ausführungsform des Radiallagers 1 wird die Steuerung des Endanschlages dadurch erreicht, daß der Freigang zwischen dem Innenteil 13' und den Elastomerkörpern 39, 39' eingestellt und ferner die Endanschlagsprogression durch die Dicke der Elastomerkörper 39, 39' eingestellt werden kann.

In Fig. 4 ist eine Schnittansicht des unteren Lagerteils 9 aus Richtung C der Fig. 3 dargestellt. Wie aus Fig. 4 ersichtlich, sind die Oberflächen der Elastomerkörper 33, 35 bzw. 29, 31 nicht planparallel zueinander ausgerichtet. In Fig. 4 ist das untere Lagerteil 9 im unbelasteten Zustand des Radiallagers dargestellt. Wird das Radiallager nun mit einem Moment belastet, so kommt es zu einer Rotation des inneren Lagerteils 13' relativ zum Außenteil 11' aufgrund der über die Momentstütze übertragene Kraft, so daß dann die gegenüberliegenden Oberflächen der Elastomerkörper 33, 35 bzw. 29, 31 parallel zueinander ausgerichtet sind. Dies bewirkt bei einer dynamischen Belastung des Radiallagers 1 eine gleichmäßige Flächenbelastung der Elastomerkörper 33, 35 bzw. 31, 29 und damit eine gleichmäßige Kraftübertragung auf das Außenteil 11', wodurch ebenfalls punktuelle Belastungen desselben vermieden werden.

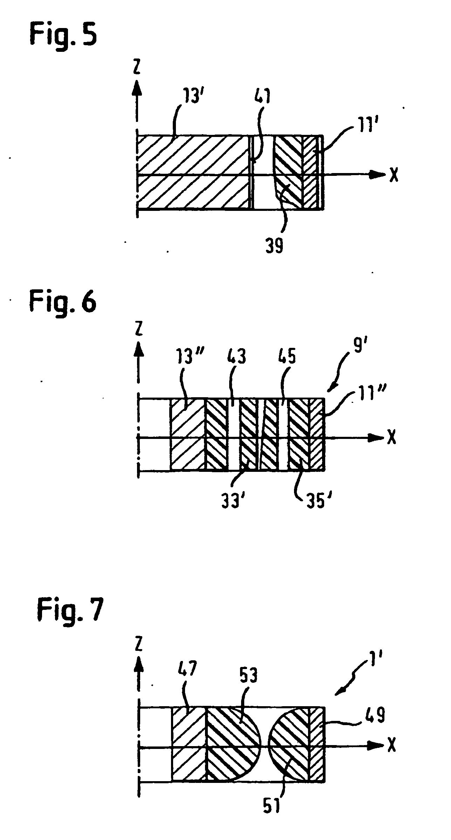

In Fig. 5 ist eine Teilschnittansicht des unteren Lagerteils 9 aus Richtung D der Fig. 3 dargestellt. Wie aus einem Vergleich der Figuren 4 und 5 ersichtlich ist der Abstand zwischen den Elastomerkörpern 33, 35 bzw. 31, 29, die die Prallsegmente bilden geringer als der Abstand zwischen dem Elastomerkörper 39 bzw. der Oberfläche 41 des Innenteils 13', die einen Endanschlag bilden.

In Fig. 6 ist eine weitere Ausführungsform eines unteren Lagerteils 9' dargestellt. Die Darstellung entspricht der Sicht aus Richtung C in Fig. 3. Wie Fig. 6 zu entnehmen ist, weist das untere Lagerteil 9' ein Innenteil 13" und ein Außenteil 11" auf. Als Prallsegment dienen Elastomerkörper 33' und 35'. Die Elastomerkörper 33', 35' weisen in ihrem Inneren Hohlräumen 43, 45 auf. Eine derartige Ausgestaltung der Elastomerkörper 33', 35' ermöglicht es, daß die Dämpfungseigenschaften der Elastomerkörper 33', 35' in einem weiten Bereich einstellbar sind. Insbesondere lassen sich auf einfache Weise die Dämpfungseigenschaften der Elastomerkörper 33', 35' einstellen, indem ein nicht dargestellte Drosselstellen eine Verbindung der Hohlräume 43, 45 mit der Umgebung bilden. Ferner kann vorgesehen sein, daß der Druck eines Fluids innerhalb der Hohlräume 43, 45 auch während des Betriebes des Radiallagers einstellbar ist, um auch während des Betriebes des Radiallagers die Dämpfungs- und Federeigenschaften des Radiallagers einstellen zu können.

Schließlich ist in Fig. 7 eine Teilschnittansicht eines weiteren erfindungsgemäßen Radiallagers 1' dargestellt. Entgegen dem Radiallager 1 ist das Radiallager 1' einteilig ausgeführt und eine nicht dargestellte gabelförmige Momentstütze ist mit einem Innenteil 47 in der aus dem Stand der Technik bekannten Weise verbunden. Ferner umfaßt das Radiallager 1' ein Auβenteil 49 und ein Prallsegment zwischen dem Innenteil 47 und dem Außenteil 49, das von Elastomerkörpern 51, 53 gebildet wird. Wie Fig. 7 zu entnehmen ist, sind die Oberflächen der Elastomerkörper nicht komplementär zueinander ausgeführt, sondern weisen beide eine gewölbte Oberfläche auf. Dies bewirkt, daß bei einer Rotation des Innenteils 47 durch eine auf das Radiallager 1' wirkende Kraft der Abstand zwischen den Elastomerkörpern 51, 53 konstant bleibt.

### Bezugszeichenliste

- 1, 1': Radiallager
- 3: Momentstütze
- 5: Träger
- 7: Lagerteil
- 9, 9': Lagerteil
- 11, 11', 11": Außenteil
- 13, 13', 13": Innenteil
- 15, 15': Aussparung
- 17, 17': Aussparung
- 19: Gewindebolzen
- 21, 21': Bohrung
- 23: Gewinde
- 25: Stege
- 29: Elastomerkörper
- 31: Elastomerkörper
- 33: Elastomerkörper
- 35: Elastomerkörper
- 39, 39': Elastomerkörper
- 41, 41': Oberfläche
- 43: Hohlraum
- 45: Hohlraum
- 47: Innenteil
- 49: Außenteil
- 51: Elastomerkörper
- 53: Elastomerkörper

- F₁, F₂: kraftkomponente
- α: Winkel

## Patentansprüche

1. Radiallager (1, 1'), insbesondere zur Lagerung von Maschinen, Maschinenteilen und/oder Kraftfahrzeugteilen, zur Aufnahme von Kräften entlang einer Radialrichtung (X-Richtung) umfassend ein sich entlang einer Längsachse des Radiallagers (1, 1 ') erstreckendes, mit einem zu lagernden Körper über zumindest eine Momentstütze (3) verbindbares im wesentlichen starres Innenteil (13, 13', 13 ", 47) und ein widerlagerbildendes, das Innenteil (13, 13', 13", 47), insbesondere zumindest bereichsweise koaxial, umgebendes im wesentlichen starres Außenteil (11, 11', 11", 49), zumindest einen das Innenteil (13, 13', 13", 47) mit dem Außenteil (11, 11', 11 ", 49) verbindenden elastischen Tragkörper (25), wobei das Innenteil (13, 13', 13", 47) im wesentlichen in der zur Längsachse senkrechten Radialrichtung (X-Richtung) relativ zum Außenteil (11, 11', 11 ", 49) bewegbar ist, ein Prallsegment (33, 33', 35', 51, 53), mittels dem im wesentlichen ab einer ersten Auslenkung des Innenteils (13, 13', 13", 47) in der Radialrichtung (X-Richtung) aus seiner Ruhelage eine Kraft auf das Außenteil (11, 11', 11 ", 49) übertragbar ist, und zumindest zwei unter einem, insbesondere in einer radialen Ebene des Radiallagers liegenden, ersten Winkel (α) voneinander beabstandete Endanschläge (39, 39', 41, 41'), mittels deren im wesentlichen ab einer zweiten Auslenkung des Innenteils (13, 13', 13 ", 47) in der Radialrichtung (X-Richtung) des Prallsegments aus seiner Ruhelage eine Kraft auf das Außenteil (11, 11', 11", 49) übertragbar ist, wobei die erste Auslenkung geringer als die zweite Auslenkung ist, dadurch **ge kennzeichnet**, dass die Endanschläge (39, 39', 41, 41') durch die Kontur des Innenteils (41, 41') und/oder des Außenteils (11, 11', 11 ", 49) derart ausgebildet sind, dass eine Flächenlast erzeugt wird, wenn komplementäre Oberflächen in Anschlag kommen.

2. Radiallager nach Anspruch 1, **dadurch gekennzeichnet, daß** die Endanschläge (39, 39', 41, 41') im wesentlichen in einer gemeinsamen radialen Ebene gemeinsam mit dem Prallsegment (29, 31, 33, 35) angeordnet sind, wobei das Prallsegment (33, 35) zwischen den Endanschlägen (39, 39', 41, 41') angeordnet ist.

3. Radiallager nach Anspruch 1 oder 2, **dadurch gekennzeichnet, daß** der erste Winkel (α) im Bereich von 30° bis 150° liegt.

4. Radiallager nach einem der Ansprüche 1 bis 3, **dadurch gekennzeichnet, daß** das Prallsegment zumindest einen ersten mit dem Innenteil (13', 13 ", 47) verbundenen elastischen Körper (31, 33, 33', 53) oder zumindest einen zweiten mit dem Außenteil (11', 11'', 49) verbundenen elastischen Körper (29, 35, 35', 51) umfaßt oder das Prallsegment durch die Kontur des Innenteils (13') oder des Außenteils gebildet ist, wobei der erste elastische Körper oder die Kontur des Innenteils eine zu dem zweiten elastischen Körper oder der Kontur des Außenteils komplementäre Oberflächenform aufweisen.

5. Radiallager nach einem der Ansprüche 1 bis 4, **dadurch gekennzeichnet, daß** die Endanschläge jeweils zumindest einen dritten mit dem Innenteil verbundenen elastischen Körper oder jeweils zumindest einen vierten mit dem Außenteil verbundenen elastischen Körper (39, 39') umfassen, wobei der dritte elastische Körper oder die Kontur des Innenteils (41, 41') eine zu dem vierten elastischen Körper (39, 39') oder der Kontur des Außenteils komplementäre Oberflächenform aufweisen.

6. Radiallager nach einem der Ansprüche 1 oder 5, **dadurch gekennzeichnet, daß** der erste, zweite, dritte und/oder vierte elastische Körper zumindest zwei Bereiche unterschiedlicher Elastizität aufweist bzw. aufweisen.

7. Radiallager nach einem der Ansprüche 1 bis 6, **dadurch gekennzeichnet, daß** der erste und zweite elastische Körper, der dritte und vierte elastische Körper oder der erste, zweite, dritte und/oder vierte elastische Körper einstückig ausgebildet sind.

8. Radiallager nach einem der Ansprüche 1 bis 7, **dadurch gekennzeichnet, daß** der erste, zweite, dritte oder vierte elastische Körper (33', 35') zumindest einen Hohlraum (43, 45), zumindest eine denselben bzw. dieselben zumindest bereichsweise durchsetzende Bohrung und/oder zumindest einen Hohlkanal aufweisen, wobei der Hohlraum, die Bohrung oder der Hohlkanal mit einem Fluid füllbar sind, der Hohlraum, die Bohrung oder der Hohlkanal zur Einstellung der elastischen Eigenschaften des bzw. der elastischen Körper vorzugsweise mittels zumindest eines Ventils zum Hinzufügen oder Entnehmen von Fluid aus dem Hohlraum, der Bohrung oder dem Hohlkanal öffnenbar und verschließbar sind, der Hohlraum, die Bohrung oder der Hohlkanal zumindest eine Verbindung mit der Umgebung des bzw. der elastischen Körper(s) mittels zumindest eines Drosselelementes aufweisen oder zumindest zwei voneinander getrennte oder über zumindest ein Ventil oder zumindest ein Drosselelement miteinander in Wirkverbindung stehende Hohlräume, Bohrungen und/oder Hohlkanäle in dem bzw. den elastischen Körper(n) vorhanden sind.

9. Radiallager nach einem der Ansprüche 1 bis 8, **dadurch gekennzeichnet, daß** eine, insbesondere im an das Radiallager angrenzenden Bereich, gabelförmig ausgeführte Momentstütze Angriff an den axialen Enden des Innenteils findet, wobei insbesondere der erste, zweite, dritte oder vierte elastische Körper (51, 53) oder der das Prallsegment oder den Endanschlag bildende Bereich des Innenteils oder Außenteils entlang der Längsachse des Radiallagers (1') zumindest bereichsweise gewölbte Kontur aufweist.

10. Radiallager nach einem der Ansprüche 1 bis 8, **dadurch gekennzeichnet, daß** das Außenteil (11, 11'), der zweite oder der vierte elastische Körper zumindest eine im wesentlichen in radialer Richtung verlaufende erste Öffnung (15, 15') zur Hindurchführung der Momentstütze (3) durch das Außenteil (11, 11') aufweist, wobei insbesondere der Tragkörper zum Hindurchführen der Momentstütze zumindest eine zweite Öffnung oder das Innenteil (13, 13'), der erste oder dritte elastische Körper zur Aufnahme der Momentstütze zumindest eine dritte Öffnung (17, 17') aufweist, wobei sich die erste (15, 15'), zweite oder dritte Öffnung (17, 17') zumindest teilweise überdecken.

11. Radiallager nach Anspruch 10, **dadurch gekennzeichnet, daß** die erste (15, 15'), zweite oder dritte (17, 17') Öffnung im wesentlichen mittig bezüglich der Länge des Radiallagers (1) angeordnet sind.

12. Radiallager nach einem der Ansprüche 1 bis 11, **dadurch gekennzeichnet, daß** das Innenteil (13, 13'), der elastische Tragkörper, der erste, zweite, dritte oder vierte elastische Körper oder das Außenteil (11, 11') entlang zumindest einer Ebene senkrecht zur Längsachse des Radiallagers (1) im Bereich der ersten (15, 15'), zweiten oder dritten (17, 17') Öffnung mehrteilig ausgeführt sind, wobei die beiden Teile des Innenteils (13, 13'), des Tragkörpers, des ersten, zweiten, dritten oder vierten elastischen Körpers oder des Außenteils (11, 11') im wesentlichen spiegelsymmetrisch zu der Ebene ausgebildet sind.

13. Radiallager nach einem der Ansprüche 4 bis 12, **dadurch gekennzeichnet, daß** der erste (31, 33) oder dritte elastische Körper oder der das Prallsegment oder den Endanschlag bildende Bereich des Innenteils zumindest bereichsweise eine bezüglich der Längsachse des Radiallagers (1) geneigte Kontur aufweist, wobei die Kontur vorzugsweise ausgehend von einer auf Höhe der ersten Öffnung liegenden, radialen Ebene entlang der Längsachse des Radiallagers in radialer Richtung nach außen geneigt ist.

14. Radiallager nach einem der Ansprüche 4 bis 13, **dadurch gekennzeichnet, daß** der zweite (29, 35, 35') oder vierte elastische Körper oder der das Prallsegment oder den Endanschlag bildende Bereich des Außenteils zumindest bereichsweise eine bezüglich der Längsachse des Radiallagers (1) geneigte Kontur aufweist, wobei die Kontur ausgehend von einer auf Höhe der ersten Öffnung liegenden, radialen Ebene der ersten Öffnung entlang der Längsachse des Radiallagers in radialer Richtung nach außen geneigt ist.

15. Radiallager nach einem der Ansprüche 10 bis 14, **dadurch gekennzeichnet, daß** das Innenteil (13, 13') mittels einer Steck-, Klipp-, Schweiß-, Kleb- oder Schraubverbindung mit der Momentstütze (3) verbindbar ist, wobei die Schraubverbindung zumindest ein von dem Innenteil oder der Momentstütze umfaßtes Außengewinde und eine von der Momentstütze (3) oder dem Innenteil umfaßten Gewindebohrung oder einen durch eine Bohrung (21, 21') sowohl im Innenteil als auch der Momentstütze (3) verlaufenden Gewindebolzen (19), wobei die Bohrung (21, 21') des Innenteils (13) und/oder der Momentstütze zumindest bereichsweise ein Innengewinde (23) oder eine aufgesetzte Mutter aufweist, umfaßt, oder das Innenteil einstückig mit der Momentstütze ausbildbar ist.

## Claims

1. A radial bearing (1, 1'), in particular for the mounting of machines, machine components and/or motor vehicle components to receive forces along a radial direction (X-direction), comprising a substantially rigid inner part (13, 13', 13", 47) extending along a longitudinal axis of the radial bearing (1, 1') that can be connected with a body to be mounted via at least one moment support (3) and a substantially rigid outer part (11, 11', 11 ", 49) forming a support bearing, which in particular at least in regions coaxially surrounds the inner part (13, 13', 13", 47), at least one elastic support body (25) joining the inner part (13, 13', 13", 47) with the outer part (11, 11', 11", 49), wherein the inner part (13, 13', 13", 47) can be substantially moved in the radial direction (X-direction) perpendicular to the longitudinal axis relative to the outer part (11, 11', 11", 49), an impact segment (33, 33', 35', 51, 53) by means of which a force can be substantially transmitted to the outer part (11, 11', 11", 49) from a first deflection of the inner part (13, 13', 13", 47) in the radial direction (X-direction) from its rest position, and at least two end stops (39, 39', 41, 41') spaced from each other under a first angle (α) by means of which a force can be transmitted to the outer part (11, 11', 11", 49) substantially from a second deflection of the inner part (13, 13', 13", 47) in the radial direction (X-direction) of the impact segment from its rest position, wherein the first deflection is less than the second deflection, **characterized in that** the end stops (39, 39', 41, 41') are embodied through the contour of the inner part (41, 41') and/or the outer part (11, 11', 11", 49) such that a surface load is generated when complementary surfaces come to a stop.

2. The radial bearing according to Claim 1, **characterized in that** the end stops (39, 39', 41, 41') are substantially arranged in a common radial plane jointly with the impact segment (29, 31, 33, 35), wherein the impact segment (33, 35) is arranged between the end stops (39, 39', 41, 41').

3. The radial bearing according to Claim 1 or 2, **characterized in that** the first angle (α) lies in the range from 30° to 150°.

4. The radial bearing according to one of Claims 1 to 3, **characterized in that** the impact segment comprises at least a first elastic body (31, 33, 33', 53) connected with the inner part (13', 13", 47) or at least a second elastic body (29, 35, 35', 51) connected with the outer part (11', 11", 49) or the impact segment is formed through the contour of the inner part (13") or the outer part, wherein the first elastic body or the contour of the inner part have a surface shape that is complementary to the second elastic body or the contour of the outer part.

5. The radial bearing according to one of Claims 1 to 4, **characterized in that** the end stops comprise respectively at least one third elastic body connected with the inner part or respectively at least a fourth elastic body (39, 39') connected with the outer part, wherein the third elastic body or the contour of the inner part (41, 41') have a surface shape that is complementary to the fourth elastic body (39, 39') or the contour of the outer part.

6. The radial bearing according to one of Claims 1 or 5, **characterized in that** the first, second, third and/or fourth elastic body has or have at least two regions of different elasticity.

7. The radial bearing according to one of Claims 1 to 6, **characterized in that** the first and second elastic body, the third and fourth elastic body or the first, second, third and/or fourth elastic body are embodied as one piece.

8. The radial bearing according to one of Claims 1 to 7, **characterized in that** the first, second, third or fourth elastic body (33', 35') have at least one hollow space (4, 45), at least one bore that at least in regions penetrates said body or bodies and/or at least one hollow channel, wherein the hollow space, the bore or the hollow channel can be filled with a fluid, the hollow space, the bore or the hollow channel can be opened and closed for adjusting the elastic characteristics of the elastic body or bodies preferably by means of at least one valve for the addition or removal of fluid from the hollow space, the bore or the hollow channel, the hollow space, the bore or the hollow channel have at least one connection with the environment of the elastic body or bodies by means of at least one throttle element or at least two hollow spaces, bores and/or hollow channels which are separated from each other or are in operative connection with each other via at least one valve or at least one throttle element, are present in the elastic body or bodies.

9. The radial bearing according to one of Claims 1 to 8, **characterized in that** a moment support embodied in a fork shape in particular in the region adjoining the radial bearing finds engagement at the axial ends of the inner part, wherein in particular the first, second, third or fourth elastic body (51, 53) or the region of the inner part or outer part forming the impact segment or the end stop at least in regions has a curved contour along the longitudinal axis of the radial bearing (1').

10. The radial bearing according to one of Claims 1 to 8, **characterized in that** the outer part (11, 11'), the second or the fourth elastic body has at least one first opening (15, 15') substantially running in radial direction for the passing through of the moment support (3) through the outer part (11, 11'), wherein in particular the support body for the passing through of the moment support has at least one second opening or the inner part (13, 13'), the first or third elastic body for receiving the moment support has at least one third opening (17, 17'), wherein the first (15, 15'), second or third opening (17, 17') overlap each other at least partially.

11. The radial bearing according to Claim 10, **characterized in that** the first (15, 15'), second or third (17, 17') opening is substantially arranged centrally with regard to the length of the radial bearing (1).

12. The radial bearing according to any one of Claims 1 to 11, **characterized in that** the inner part (13, 13'), the elastic support body, the first, second, third or fourth elastic body or the outer part (11, 11') are embodied in multiple parts along at least one plane vertically to the longitudinal axis of the radial bearing (1) in the region of the first (15, 15'), second or third (17, 17') opening, wherein the two parts of the inner part (13, 13'), of the support body, the first, second, third or fourth elastic body or the outer part (11, 11') are embodied substantially mirror-symmetrically to the plane.

13. The radial bearing according to one of Claims 4 to 12, **characterized in that** the first (31, 33) or third elastic body or the region of the inner part forming the impact segment or the end stop at least in regions has a contour that is inclined with respect to the longitudinal axis of the radial bearing (1), wherein the contour, preferably starting from a radial plane located at the height of the first opening is inclined in radial direction outwards along the longitudinal axis of the radial bearing.

14. The radial bearing according to one of Claims 4 to 13, **characterized in that** the second (29, 35, 35') or fourth elastic body or the region of the outer part forming the impact segment or the end stop at least in regions has a contour that is inclined with respect to the longitudinal axis of the radial bearing (1), wherein the contour starting from a radial plane of the first opening located at the height of the first opening is inclined in radial direction outwards along the longitudinal axis of the radial bearing.

15. The radial bearing according to one of Claims 10 to 14, **characterized in that** the inner part (13, 13') can be connected with the moment support (3) by means of a plugging, clipping, welding, gluing or screwing connection, wherein the screwing connection at least comprises an outer thread enclosed by the inner part or the moment support and a threaded bore enclosed by the moment support (3) or the inner part or a threaded pin (19) which runs through a bore (21, 21') both in the inner part as well as the moment support (3), wherein the bore (21, 21') of the inner part (13) and/or of the moment support at least in regions has an internal thread (23) or a fitted nut, or the inner part can be embodied in one piece with the moment support.

## Revendications

1. Palier radial (1,1'), notamment pour positionner des machines, pièces de machines et/ou pièces de véhicule, pour absorber des forces le long d'une direction radiale (direction X) comprenant une pièce intérieure (13,13',13",47) essentiellement rigide s'étendant le long d'un axe longitudinal du palier radial (1,1'), pouvant être relié au corps à positionner par l'intermédiaire d'au moins une bielle de couple(3) et une pièce extérieure (11,11',11 ",49) formant culée, entourant essentiellement la pièce intérieure (13,13',13",47), notamment au moins coaxialement sur des portions, au moins un corps porteur élastique (25) reliant la pièce intérieure (13,13',13",47) à la pièce extérieure (11,11',11",49), dans lequel la pièce intérieure (13,13',13",47) est déplaçable relativement à la pièce extérieure (11,11',11",49) essentiellement dans la direction radiale (direction X) perpendiculaire à l'axe longitudinal, un segment d'impact (33,33',35',51,53) au moyen duquel essentiellement à partir d'une première déviation de la pièce intérieure (13,13',13",47) dans la direction radiale (direction X) à partir de sa position de repos une force peut être transmise à la pièce extérieure (11, 11', 11", 49), et au moins deux butées d'extrémité (39,39',41,41') espacées l'une de l'autre d'un premier angle (α), au moyen desquelles essentiellement à partir d'une deuxième déviation de la partie intérieure (13,13',13",47) dans la direction radiale (direction X) du segment d'impact à partir de sa position de repos une force peut être transmise sur la pièce extérieure (11,11',11',49), dans lequel la première déviation est inférieure à la deuxième déviation, **caractérisé en ce que** les butées d'extrémité (39,39',41,41') sont réalisées de telle sorte du fait du contour de la pièce intérieure (41,41') et/ou de la pièce extérieure (11,11',11",49) qu'une charge de surface soit générée, quand des surfaces complémentaires viennent en butée.

2. Palier radial selon la revendication 1, **caractérisé en ce que** les butées d'extrémité (39,39',41,41') sont disposées essentiellement dans un plan radial commun conjointement au segment d'impact (29,31,33,35), dans lequel le segment d'impact (33,35) est disposé entre les butées d'extrémité (39,39',41,41').

3. Palier radial selon les revendications 1 ou 2, **caractérisé en ce que** le premier angle (α) définit un angle dans la plage de 30° à 150°.

4. Palier radial selon une des revendications 1 à 3, **caractérisé en ce que** le segment d'impact comprend au moins un premier corps élastique (31,33,33',53) relié à la pièce intérieure (13',13",47) ou au moins un deuxième corps élastique (29,35,35',51) relié à la pièce extérieure (11',11",49) ou le segment d'impact est formé par le contour de la pièce intérieure (13') ou de la pièce extérieure, dans lequel le premier corps élastique ou le contour de la pièce intérieure présentent une forme de surface complémentaire du deuxième corps élastique ou du contour de la pièce extérieure.

5. Palier radial selon une des revendications 1 à 4, **caractérisé en ce que** les butées d'extrémité comprennent respectivement au moins un troisième corps élastique relié à la pièce intérieure ou respectivement au moins un quatrième corps élastique (39,39') relié à la pièce extérieure, dans lequel le troisième corps élastique ou le contour de la pièce intérieure (41,41') présentent une forme de surface complémentaire au quatrième corps élastique (39,39') ou au contour de la pièce extérieure.

6. Palier radial selon une des revendications 1 à 5, **caractérisé en ce que** le premier, deuxième, troisième et/ou quatrième corps élastique présente, resp. présentent au moins deux portions d'élasticité différente.

7. Palier radiale selon une des revendications 1 à 6, **caractérisé en ce que** le premier et le deuxième corps élastique, le troisième et le quatrième corps élastique ou le premier, deuxième, troisième et/ou quatrième corps élastique sont réalisés en un seul tenant.

8. Palier radial selon une des revendications 1 à 7, **caractérisé en ce que** le premier, deuxième, troisième ou quatrième corps élastique (33',35') présentent au moins un espace creux (43,45), au moins un alésage traversant au moins sur des portions celui-ci, resp. ceux-ci et/ou au moins un canal creux, dans lequel l'espace creux, l'alésage ou le canal creux peuvent être remplis par un fluide, l'espace creux, l'alésage ou le canal creux pour régler les propriétés élastiques du, resp. des corps élastiques peuvent être ouverts et fermés de préférence au moyen d'au moins une soupape pour introduire ou retirer un fluide de l'espace creux, l'alésage ou le canal creux, l'espace creux, l'alésage ou le canal creux présentent au moins une liaison avec l'environnement ambiant du, resp. des corps élastiques au moyen d'au moins un élément d'étranglement ou au moins deux espaces creux, alésages et/ou canaux creux séparés l'un de l'autre ou en liaison opérationnelle l'un avec l'autre par l'intermédiaire d'au moins une soupape ou au moins un élément d'étranglement sont présents dans le(les) corps élastique(s).

9. Palier radial selon une des revendications 1 à 8, **caractérisé en ce que** une bielle de couple réalisée en forme de fourche, notamment dans la zone contiguë au palier radial vient en prise avec l'extrémité axiale de la pièce intérieure, dans lequel notamment le premier, deuxième, troisième ou quatrième corps élastique (51,53) ou la zone de la pièce intérieure ou de la pièce extérieure formant le segment d'impact ou la butée d'extrémité présente le long de l'axe longitudinal du palier radial (1') au moins un contour bombé sur des portions.

10. Palier radial selon une des revendications 1 à 8, **caractérisé en ce que** la pièce extérieure (11,11'), le deuxième ou le quatrième corps élastique présente au moins une première ouverture (15,15') s'étendant essentiellement dans la direction radiale afin de guider au travers la bielle de couple (3) à travers la pièce extérieure (11,11'), dans lequel notamment le corps porteur présente pour guider au travers la bielle de couple au moins une deuxième ouverture ou la pièce intérieure (13,13'), le premier ou le troisième corps élastique pour recevoir la bielle de couple présente au moins une troisième ouverture (17,17'), dans lequel la première (15,15'), deuxième ou troisième ouverture (17,17') se recouvrent au moins partiellement.

11. Palier radial selon la revendication 10, **caractérisé en ce que** la première (15,15'), deuxième ou troisième (17,17') ouverture sont disposées essentiellement au centre par rapport à la longueur du palier radiale (1).

12. Palier radial selon une des revendications 1 à 11, **caractérisé en ce que** la pièce intérieure (13,13'), le corps porteur élastique, le premier, deuxième, troisième ou quatrième corps élastique ou la pièce extérieure (11,11') sont réalisés en plusieurs parties le long d'au moins un plan perpendiculaire à l'axe longitudinal du palier radial (1) au niveau de la première (15,15'), deuxième ou troisième (17,17') ouverture, dans lequel les deux parties de la pièce intérieure (13,13') du corps porteur, du premier, deuxième, troisième ou quatrième corps élastique ou de la partie extérieure (11,11') sont réalisées essentiellement symétriquement par rapport au plan.

13. Palier radial selon une des revendications 4 à 12, **caractérisé en ce que** le premier (31,33) ou le troisième corps élastique ou la zone de la pièce intérieure formant le segment d'impact ou la butée d'extrémité présente au moins sur des portions un contour incliné par rapport à l'axe longitudinal du palier radial (1), dans lequel le contour est de préférence incliné vers l'extérieur dans la direction radiale en partant d'un plan radial, situé à la hauteur de la première ouverture le long de l'axe longitudinal du palier radial.

14. Palier radial selon une des revendications 4 à 13, **caractérisé en ce que** le deuxième (29,35,35') ou le quatrième corps élastique ou la zone de la pièce extérieure formant le segment d'impact ou la butée d'extrémité présente sur des portions un contour incliné par rapport à l'axe longitudinal du palier radial (1), dans lequel le contour est incliné vers l'extérieur dans la direction radiale en partant d'un plan radial, situé à la hauteur de la première ouverture le long de l'axe longitudinal du palier radial.

15. Palier radial selon une des revendications 10 à 14, **caractérisé en ce que** la pièce intérieure (13,13') peut être reliée au moyen d'une liaison par encliquetage, clipsage, soudure, collage ou vissage à la bielle de couple (3), dans lequel la liaison par vissage comprend au moins un filetage extérieur englobé par la pièce intérieure ou la bielle de couple et un alésage fileté englobé par la bielle de couple (3) ou la pièce intérieure ou un boulon fileté s'étendant à travers un alésage (21,21') tant dans la pièce intérieure que dans la bielle de couple (3), dans lequel l'alésage (21,21') de la pièce intérieure (13) et/ou de la bielle de couple présente au moins sur des portions un filetage interne (23) ou un écrou enfoncé, ou la pièce intérieure peut être réalisée en un seul tenant avec la bielle de couple.
